(19) Europäisches Patentamt
European Patent Office
Office européen des brevets

(11) **EP 1 719 467 B1**

## (12) EUROPÄISCHE PATENTSCHRIFT

(45) Veröffentlichungstag und Bekanntmachung des Hinweises auf die Patenterteilung:
**21.11.2018 Patentblatt 2018/47**

(21) Anmeldenummer: 05726467.3

(22) Anmeldetag: **10.02.2005**

(51) Int Cl.:
***A61B 17/50*** *(2006.01)*    ***A61C 3/00*** *(2006.01)*

(86) Internationale Anmeldenummer:
**PCT/RU2005/000052**

(87) Internationale Veröffentlichungsnummer:
**WO 2005/077286 (25.08.2005 Gazette 2005/34)**

(54) **EXTRAKTOR ZUR ENTFERNUNG EINES WERKZEUGFRAGMENTS AUS EINEM ZAHNWURZELKANAL**

EXTRACTOR FOR REMOVING A TOOL FRAGMENT FROM A TOOTH ROOT-CANAL

EXTRACTEUR PREVU A L'EXTRACTION D'UN FRAGMENT D'UN INSTRUMENT DU CANAL DE LA RACINE D'UNE DENT

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **13.02.2004 RU 2004104003**

(43) Veröffentlichungstag der Anmeldung:
**08.11.2006 Patentblatt 2006/45**

(73) Patentinhaber:
- **Aleksandrovskiy, Vladimir Leonidovich Moscow, 113035 (RU)**
- **Tsyganov, Alexander Borisovich St. Petersburg, 199397 (SU)**

(72) Erfinder:
- **Aleksandrovskiy, Vladimir Leonidovich Moscow, 113035 (RU)**
- **Tsyganov, Alexander Borisovich St. Petersburg, 199397 (SU)**

(74) Vertreter: **Jeck, Anton Jeck & Fleck Patentanwälte Klingengasse 2 71665 Vaihingen/Enz (DE)**

(56) Entgegenhaltungen:
**RU-C1- 2 239 463    SU-A1- 331 591
SU-A3- 1 809 760    US-A- 3 322 124
US-A- 4 992 045**

## Beschreibung

### Erfindungsgebiet

Die vorliegende Erfindung betrifft die Stomatologie und ist zur Entfernung eines Werkzeugbruchstücks von Bruchstücken von Metallwerkzeug entworfen, das eventuell brechen und im Zahnwurzelkanal, beispielsweise bei einer endodontischen Behandlung, stecken bleiben kann.

### Stand der Technik

Bisher sind zwei Einrichtungen zur Entfernung von Werkzeugbruchstücken aus einem Zahnwurzelkanal (USA-Patente 5 879 160 und 6 227 855, [1, 2]) bekannt; nach diesen Schriften wird eine mechanische Klemme in den Zahnkanal über ein Zylinderrohr hineingeführt, die die Aufnahme des Bruchstücks sicherstellt. Danach wird die Klemme zusammen mit dem Rohr und dem aufgenommenen Bruchstück aus dem Wurzelkanal entfernt. Das allgemeine Merkmal gegenüber der vorliegenden Erfindung besteht darin, dass das Werkzeug in den Wurzelkanal bis zum Kontakt mit dem Bruchstück hineingeführt und zusammen mit dem aufgenommenen Bruchstück herausgezogen wird. Jedoch erfordert dieses Werkzeug eine unerwünschte Vorerweiterung des Wurzelkanals bis zum stecken gebliebenen Bruchstück hinein, weil der Klemmengreifer das Bruchstück umfassen muss. Außerdem erschwert der mühsame Zugriff in den engen Wurzelkanal hinein (Kanaldurchmesser ca. 0,2 bis 1 mm) eine effektive Überprüfung des Kontakts und der Aufnahme des Bruchstücks durch das Werkzeug. Darüber hinaus ist der Wurzelkanal meistens gekrümmt, und bei diesen Bedingungen ist es schwer, eine ausreichende mechanische Kraft auf die Klemme zu übertragen, um das Bruchstück sicher zu ergreifen. Deswegen wird die erforderliche Greifkraft zwischen dem Werkzeug und dem im Wurzelkanal ziemlich stark eingeklemmten Bruchstück öfter nicht erreicht, und deshalb lässt sich das Bruchstück oft nicht entfernen.

Eine nach ihrer Wirkungsweise ähnliche, bekannte Vorrichtung (US-Patentanmeldung 20030124485, [3]) dient zur Entfernung von Werkzeugbruchstücken aus einem Zahnwurzelkanal mittels einer Drahtschlinge, die in den Kanal über ein Zylinderrohr eingeführt wird und die Aufnahme des Bruchstücks sicherstellt. Jedoch setzt dieses Werkzeug auch eine unerwünschte Vorerweiterung des Wurzelkanals direkt bis zum stecken gebliebenen Bruchstück voraus, wobei es auch problematisch ist, die erforderliche Greifkraft zwischen der Drahtschlinge und dem Metallbruchstück mit einer unregelmäßigen Geometrie bei fehlender Ergreifungskontrolle zu erreichen.

Es ist eine weitere Einrichtung zur Entfernung von Werkzeugbruchstücken aus dem Zahnwurzelkanal (USA-Patent 4 746 292, [4]) bekannt, bei dem Klebstoff in den Kanal über ein Zylinderrohr eingeführt wird. Das Bruchstück haftet am Rohr und wird anschließend aus dem Kanal entfernt. Das allgemeine Merkmal gegenüber der vorliegenden Erfindung besteht darin, dass das Werkzeug in den Wurzelkanal bis zum Kontakt mit dem Bruchstück hineingeführt und zusammen mit dem aufgenommenen Bruchstück herausgezogen wird. Jedoch setzt dieses Werkzeug eine unerwünschte Vorerweiterung des Wurzelkanals bis zum stecken gebliebenen Bruchstück voraus, so dass das Zylinderrohr das Bruchstück umfasst. Außerdem erreicht der selbst härtende Klebstoff die notwendige Haltbarkeit relativ langsam; dabei ist der Patient gezwungen, im Dentalbehandlungsstuhl zu bleiben, wodurch zusätzliche Unbequemlichkeiten entstehen. Außerdem ist es wegen der unregelmäßigen Form des Bruchstücks und der Lockerheit beim Umfassen des Bruchstücks durch das Zylinderrohr möglich, dass der Klebstoff in den Wurzelkanal hinaus fließt und das Zylinderrohr an die Kanalwände klebt. Dies ist aber auf keinen Fall zulässig.

Auf der US 3,322,124 beruht die zweiteilige Form des Anspruchs 1 und offenbart einen Extraktor zur Entfernung eines Metallwerkzeugbruchstücks aus einem Zahnwurzelkanal. Vorteilhafte Ausführungsformen der Erfindung gehen aus den abhängigen Ansprüchen hervor. Der Extraktor umfasst zwei voneinander getrennte und an eine Stromquelle angeschlossene Metallelektroden. Die Elektroden weisen einen Aufbau auf, der einen elektrischen Kontakt zwischen jeder der Elektroden und dem zu entfernenden Metallbruchstück sicherstellt. Mittels der Stromquelle kann ein Stromimpuls über einen aus der ersten Elektrode, dem Metallbruchstück und der zweiten Elektrode bestehenden geschlossenen Stromkreis gegeben werden, dessen Stärke groß genug ist, um das Bruchstück an die Elektroden mittels Erhitzung der Kontaktstellen zwischen den Elektroden und dem zu entfernenden Metallbruchstück anhaften zu lassen. Die Querabmessungen der Metallelektroden ermöglichen, die beiden Elektroden gleichzeitig in den Wurzelkanal einzuführen und bestehen aus einem dem des Metallwerkzeugbruchstücks gleichartigen oder im Hinblick auf elektrische Leitfähigkeit, Wärmekapazität und Schmelztemperatur ähnlichen Material und weisen einen Aufbau auf, der einen elektrischen Kontakt zwischen jeder der Elektroden (3, 4) und dem zu entfernenden Metallbruchstück (5) sicherstellt

Durch die US 4,992,045 ist eine Vorrichtung zum Einbringen eines elektrisch leitfähigen Füllmaterials in einen Zahnwurzelkanal und zur anschließenden Aufheizung des Füllmaterials zu dessen Aushärtung bekannt.

Als Prototyp wird die der vorliegenden Erfindung am nächsten kommende, technische Lösung (US 3,322,124 genommen, nach der ein Verfahren und eine Einrichtung zur Entfernung von Werkzeugbruchstücken aus einem Zahnwurzelkanal mittels einer elektrolytischen Auflösung dieses Metallbruchstücks vorgeschlagen werden. Gemäß dieses Prototyps wird eine erste isolierte Metallelektrode in Form eines Zylinderrohrs benutzt. Die Elektrode wird in den Zahnwurzelkanal mit einem kleinen Abstand bis zum Metallbruchstück hineingeführt. Außerdem wird eine zweite isolierte Einstichelektrode benutzt, die innerhalb des beschriebenen Zylinderrohrs verläuft und vorgeschoben wird, bis ein elektrischer Kontakt mit dem Metallbruchstück erreicht wird. In den Spalt zwischen dem Bruchstück und dem Zylinderrohr wird ein gesundheitsverträglicher Elektrolyt geführt; auf die Einstichelektrode wird ein positives Potential und zwischen den erwähnten Elektroden wird ein elektrischer Strom mit einer gesundheitlich verträglichen Stärke gegeben, bis das Bruchstück infolge dieser Elektrolyse völlig aufgelöst ist.

Der Prototyp und die vorliegende Erfindung weisen folgende gemeinsame Merkmale auf: In den Wurzelkanal werden mindestens zwei voneinander isolierte Metallelektroden hineingeführt; dabei wird ein elektrischer Kontakt zwischen der einen Elektrode und dem zu entfernenden Metallbruchstück erreicht; anschließend wird ein elektrischer Strom über die Elektroden durchgelassen. Jedoch muss der Strom laut dem Prototyp ziemlich stark sein und die Elektroden ziemlich lange beanspruchen, um das Metallbruchstück aufzulösen. Dadurch werden dem Patienten aber Unbequemlichkeiten bereitet. Darüber hinaus werden die aufgelösten Metallkationen des Bruchstücks sowie Elektrolytanionen wegen ihrer großen Beweglichkeit in der Lösung im feuchten, porenreichen Gewebe rings um den Zahn gestreut. Dies kann unerwünschte, toxische Folgen verursachen.

### Zusammenfassung der Erfindung

Die Aufgabe der vorliegenden Erfindung besteht darin, ein Werkzeug zur schnellen und sicheren Entfernung von Metallwerkzeugbruchstücken zu schaffen, die beispielsweise bei einer endodontischen Behandlung weiter brechen und im Zahnwurzelkanal stecken bleiben können. Das für die endodontische Behandlung bestimmte Werkzeug wird in der Regel aus Stahl bzw. aus einer Ni-Ti-Legierung angefertigt und ist kegelförmig mit einer scharfen Spitze und mit über die gesamte Länge verteilten Schneideelementen zur Bearbeitung des Wurzelkanals und zur Entfernung des infizierten Dentins bei der ärztlichen Behandlung versehen. Üblicherweise werden Werkzeugsätze einer bestimmten Baureihe von unterschiedlicher Geometrie und Durchmesser zur Behandlung von Wurzelkanälen benutzt. Der Werkzeugdurchmesser beträgt in seinem weitesten Teil normalerweise etwa 1 mm, und im angespitzten Endteil im Abstand von 5 mm bis zur Spitze etwa 0,2-0,3 mm. Leider neigen diese Werkzeuge während der mechanischen Wurzelkanalbehandlung zu einem unerwarteten Abbrechen, wobei das Bruchstück im Kanal stecken bleibt. Wird das Bruchstück nicht entfernt, so ist es nicht möglich, die endodontische Zahnbehandlung einschließlich der Entfernung von infiziertem Zahngewebe und Füllung des Wurzelkanals, beispielsweise mit Guttapercha, erfolgreich abzuschließen, wodurch öfter klinische Komplikationen herbeigeführt werden. Die Erfindung löst die gestellte Aufgabe wie folgt: in den Wurzelkanal werden mindestens zwei voneinander getrennte Metallelektroden eingeführt; dabei wird ein elektrischer Kontakt zwischen der einen Elektrode und dem zu entfernenden Metallbruchstück hergestellt, und anschließend wird ein elektrischer Strom durch die Elektroden durchgelassen. Die voneinander isolierten Elektroden, die in den Wurzelkanal eingeführt werden, haben eine derartige Geometrie, dass bei ihrer Einführung ein gleichzeitiger, elektrischer Kontakt beider Elektroden mit dem Metallbruchstück sichergestellt wird; danach wird über den durch die erste Elektrode, die zweite Elektrode und das Metallbruchstück gebildeten, geschlossenen Stromkreis ein elektrischer Impuls geschickt, dessen Stromstärke und Dauer derart bemessen werden, dass das Bruchstück an den Elektroden mittels Aufheizung an den Kontaktstellen angeklebt wird; dann werden die Elektroden zusammen mit dem Bruchstück aus dem Wurzelkanal herausgezogen.

Gemäß der Erfindung bestehen die Elektroden aus einem Material, das mit dem Material des Bruchstücks des Metallwerkzeugs gleichartig ist. Dadurch werden die gleichen elektrischen Aufheizungsbedingungen im Kontaktbereich der Elektroden und des Bruchstücks sowie die bestmöglichen Bedingungen zu Widerstandsmikroschweißung und fester Verbindung miteinander sichergestellt.

Dabei ist eine zusätzliche Erweiterung des Wurzelkanals in der Regel nicht erforderlich, weil die erwähnten, isolierten Elektroden als zylinderförmige Baugruppe ausgeführt werden können, deren Stirnflächendurchmesser etwas so groß wie der Durchmesser des Wurzelkanals in der Bruchstückspartie gewählt wird. Dies ermöglicht es, die Elektroden in den Wurzelkanal bis zum Kontakt mit der Stirnfläche des Bruchstücks schnell hineinzuführen. Die elektrische Impulsdauer zur Anhaftung des Bruchstücks an die Elektroden durch Aufheizung der Kontaktstellen kann Bruchteile einer Sekunde betragen. Beim Prototyp dagegen ist bedeutend mehr Zeit zur Auflösung des Bruchstücks durch Elektrolyse erforderlich. Die Festigkeit beim Anhaften des Bruchstücks an die Elektroden wird ausreichen, um die Elektroden zusammen mit dem Bruchstück durch lokales Mikroschweißen bei der Aufheizung zu entfernen. Im Unterschied zum Prototyp kommt keine Streuung des Bruchstückmaterials im Zahngewebe zustande, weil das Bruchstück in einem Stück entfernt wird. Dadurch ist es möglich, das Werkzeugbruchstück aus Metall schnell und wirksam zu entfernen.

Beispielsweise wird in den Wurzelkanal ein gesundheitsunschädliches Mittel vor der Elektrodeneinführung eingegeben, das die Klemmkraft des Werkzeugbruchstücks im Wurzelkanal vermindert. Dadurch wird das Herausziehen des Bruchstücks erleichtert, wenn die Haftkraft zwischen dem Bruchstück und den Elektroden beim ersten Versuch ungenügend ist und das Bruchstück sich von den Elektroden während ihrer Entfernung aus dem Kanal löst.

Beispielsweise wird auch ein zylinderförmiges Element vor der Elektrodeneinführung in den Wurzelkanal eingeführt, bis
dieses Element das Bruchstück berührt. Dieses Element wird mit Ultraschall mit einer gesundheitlich verträglichen Stärke behandelt. Die Ultraschallschwingungen mindern die Klemmkraft des Werkzeugbruchstücks im Wurzelkanal. Sie ermöglichen auch eine leichtere Entfernung des Bruchstücks, wenn die Haftkraft zwischen dem Bruchstück und den Elektroden beim ersten Versuch ungenügend ist und das Bruchstück sich von den Elektroden während deren Entfernung aus dem Kanal löst.

Darüber hinaus werden beispielsweise die Stromstärke und -wirkungsdauer kontrolliert, um das optimale Anhaften des Bruchstücks an den Elektroden bei minimaler Wärmeeinwirkung rings um das Zahngewebe zu erreichen, d. h. die Stromstärke wird je nach Kontaktwiderstand zwischen dem Bruchstück und den Elektroden gewählt, und der Strom wird abgeschaltet, wenn ein bestimmter Kontaktwiderstand erreicht wird, der die Anhaftung des Bruchstücks an die Elektroden gewährleistet.

Eine Lösung der vorgenannten Aufgabe bietet der erfindungsgemäße Extraktor zur Entfernung eines Metallbruchstücks aus dem Zahnwurzelkanal. Die als Extraktor bezeichnete Einrichtung besteht aus einer elektrischen Stromquelle und zwei an diese angeschlossenen und voneinander getrennten Metallelektroden, deren Querabmessungen es ermöglichen, die beiden Elektroden gleichzeitig in den Wurzelkanal einzuführen, bis eine der Elektroden das Metallbruchstück berührt. Nach der vorliegenden Erfindung haben die beschriebenen Elektroden einen derartigen Aufbau, dass bei der Einführung in den Wurzelkanal ein elektrischer Kontakt zwischen jeder der Elektroden und dem zu entfernenden Metallbruchstück sichergestellt werden kann; die Ausführung der elektrischen Stromquelle ermöglicht es, über den gesamten, geschlossenen Stromkreis, der aus der ersten Elektrode, dem Metallbruchstück und der zweiten Elektrode besteht, einen Stromimpuls zu geben, dessen Stärke groß genug ist, um das Bruchstück an die Elektroden mittels Aufheizung an den Kontaktstellen anhaften zu lassen. Im Gegensatz zum Prototyp wird der elektrische Strom nur zur Anhaftung des Bruchstücks an die Elektroden und nicht zu einer vollständigen Auflösung des Bruchstücks benutzt.

Erfindungsgemäß bestehen die Elektroden aus einem Material, das mit dem Material des Bruchstücks des Metallwerkzeugs gleichartig ist. Dadurch werden die gleichen elektrischen Aufheizungsbedingungen im Kontaktbereich der Elektroden und des Bruchstücks sowie die bestmöglichen Bedingungen zu Widerstandsmikroschweißung und fester Verbindung miteinander sichergestellt.

Nach einer weiteren, bevorzugten Ausbildung der Erfindung sind die oben genannten, isolierten Elektroden als zylindrische Baugruppe und jede der erwähnten Elektroden als Halbzylinder ausgeführt; dabei sind die Halbzylinder miteinander an ihren flachen Oberflächen verbunden. Der Raum zwischen den Halbzylindern ist über die gesamte Länge mit einem Dielektrikum gefüllt, und die Stirnflächen der Elektroden, die mit dem Bruchstück in Kontakt kommen, weisen kein Dielektrikum auf. Die Geometrie der beiden Elektroden kann relativ frei sein; wenn jedoch die Einfachheit der Herstellung, die Bruchfestigkeit, die Minimierung der Elektrodenimpedanz und dementsprechend die an die Elektroden angelegte, elektrische Spannung berücksichtigt werden, stellt die beste Ausbildung der Fall dar, in dem beide Elektroden die gleiche Querfläche über die gesamte Länge aufweisen und als Halbzylinder ausgeführt sind.

Gemäß einer weiteren Ausbildung der Erfindung weisen die oben genannten Stirnflächen der isolierten Elektroden eine flache Form auf, um den Kontakt der zugeführten Elektroden mit einem flachen Bruchstück sicherzustellen. Dadurch wird die größtmögliche Kontaktfläche zwischen den Elektroden und dem flachen Bruchstück erreicht.

Gemäß einer weiteren Ausbildung der Erfindung weisen die oben genannten Stirnflächen der isolierten Elektroden eine konkave Form auf, um den Kontakt der zugeführten Elektroden mit einem konvexen Bruchstück sicherzustellen. Dies ergibt die größtmögliche Kontaktfläche zwischen den Elektroden und dem konvexen Bruchstück, dass auch beliebig geformte Zacken aufweisen kann.

Gemäß einer weiteren Ausbildung der Erfindung weist die Zylinderbaugruppe mit isolierten Elektroden an ihrem Ende eine kegelförmige Einengung auf, die ihrer Form nach dem Wurzelkanal im Kontaktbereich mit dem Bruchstück ähnlich ist. Dadurch wird es möglich, eine geringe Gesamtimpedanz der Elektroden zu erreichen, weil der Wurzelkanal in der Regel kegelförmig ist. Darüber hinaus kann eine gleichachsige Anordnung und ein optimaler Kontakt zwischen dem Bruchstück und den Elektroden erzielt werden.

Gemäß einer weiteren Ausbildung der Erfindung sind die Elektroden in der beschriebenen Zylinderbaugruppe bis auf die Stirnflächen mit einem dielektrischen Kunststoff bedeckt. Dieser dielektrische Überzug auf der Oberfläche der Zylinderbaugruppe verstärkt die Elektrodenverbindung zusätzlich und sichert den elektrischen Stromdurchfluss ausschließlich im Bruchstücksbereich.

Gemäß einer weiteren Ausbildung der Erfindung wird als dielektrischer Kunststoff Teflon verwendet. Dieses Polymer zeichnet sich durch eine hohe Temperaturbeständigkeit und gute dielektrische und mechanische Eigenschaften aus.

Gemäß einer bevorzugten, weiteren Ausbildung der Erfindung weisen die oben genannten Metallelektroden außerhalb des eventuellen Bruchstückkontaktbereichs einen Überzug aus einem Material auf, dessen spezifischer, elektrischer Widerstand gegenüber dem des Elektrodenmaterials kleiner ist. Dies sorgt dafür, dass die angelegte, elektrische Spannung bei einer vorgegebenen Stromstärke vermindert wird, denn es genügt, um die Elektrodenimpedanz empfindlich zu mindern, ohne die Baugruppenfläche zu vergrößern, eine dünne Schicht einer leitfähigeren Beschichtung aufzubringen.

Gemäß einer bevorzugten, weiteren Ausbildung der Erfindung wird Kupfer, Silber oder Gold als Material hoher elektrischer Leitfähigkeit verwendet.

Gemäß der Erfindung ist die elektrische Stromquelle auf der Basis eines Kondensators ausgeführt, der bis zu einer vorgegebenen Gleichspannung von der Stromquelle geladen und anschließend durch impulsgesteuertes Schalten über die oben genannten Elektroden und das Bruchstück

entladen wird. Dadurch ist es möglich, einen elektrischen Stromimpuls einer erforderlichen Größe und Dauer zu erzeugen, auch wenn die Stromversorgung durch einen Akkumulator erfolgt.

Gemäß einer bevorzugten, weiteren Ausbildung der Erfindung ist die elektrische Stromquelle mit einer Anzeige für die erfolgte Kontaktgabe und die Widerstandsgröße zwischen den genannten Elektroden und dem Metallbruchstück versehen. Diese Bauweise sieht auch die Möglichkeit für eine befehlsgestützte Stromimpulserzeugung vor. Dadurch können die Elektroden in den Wurzelkanal bis zum Kontakt mit Bruchstück eingeführt, die beste gegenseitige Lage der Elektroden und des Bruchstücks zwecks Widerstandsmikroschweißung ausgewählt und anschließend ein Mikroschweißen auf Befehl des Arztes vorgenommen werden.

Gemäß einer bevorzugten, weiteren Ausbildung der Erfindung ist die elektrische Stromquelle derart ausgebildet, dass eine stabile Spannung bzw. Stromstärke im Stromkreisbereich zwischen den genannten Elektroden und dem Metallbruchstück aufrechterhalten wird, um die optimale Haltbarkeit der Widerstandsmikroschweißung des Bruchstücks an die Elektroden und eine rechtzeitige Abschaltung nach dem Erreichen der optimalen Haltbarkeit sicherzustellen. In manchen Fällen wird dadurch ermöglicht, die beste Verbindung des Bruchstücks mit den Elektroden und eine zuverlässige Entfernung des Bruchstücks sicherzustellen.

### Kurzbeschreibung der Zeichnungen

Die Erfindung wird nun anhand von Ausführungsbeispielen näher erläutert. Es zeigen:

Fig. 1     in schematische Weise einen Zahn und die gegenseitige Lage eines Werkzeugbruchstücks im Wurzelkanal sowie zweier voneinander getrennte Elektroden zur Entfernung des Bruchstücks,

Fig. 2     eine erste Ausführung einer Zylinderbaugruppe mit isolierten Elektroden zur Entfernung des Werkzeugbruchstücks aus dem Wurzelkanal mit flachen Stirnflächen,

Fig. 2a    einen Querschnitt der Baugruppe der Fig. 2,

Fig. 3     eine zweite Ausführung einer Zylinderbaugruppe mit isolierten Elektroden mit konkaven Stirnflächen zur Entfernung des Werkzeugbruchstücks aus dem Kanal,

Fig. 3a    einen Querschnitt der Baugruppe der Fig. 3,

Fig. 4     eine dritte Ausführung einer Zylinderbaugruppe mit isolierten Elektroden mit kegelförmiger Spitze zur Entfernung des Werkzeugbruchstücks aus dem Wurzelkanal,

Fig. 4a    einen Querschnitt der Baugruppe der Fig. 4 und

Fig. 5     ein Blockdiagramm der elektrischen Stromquelle zum Anschluss an zwei isolierte Elektroden; diese Stromquelle sorgt dafür, dass das Bruchstück an die Elektroden durch Impulserhitzung an den Kontaktstellen anhaftet und zusammen mit den Elektroden aus dem Wurzelkanal entfernt werden kann.

### Beschreibung der Ausführungsbeispiele

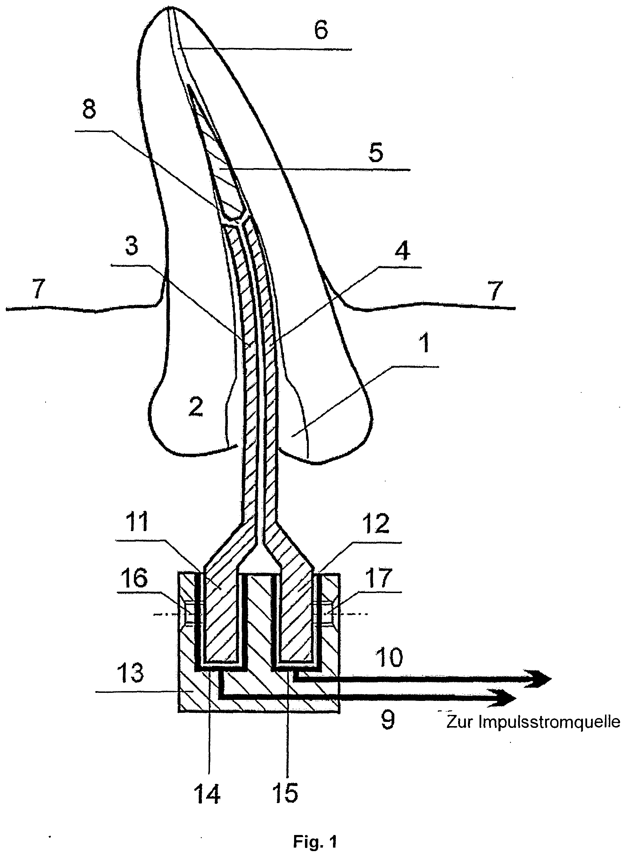

Die Funktion des Extraktors zur Entfernung eines Bruchstücks eines Metallwerkzeugs aus dem Zahnwurzelkanal wird mittels der Fig.1 erläutert und läuft wie folgt ab. Zwei voneinander getrennte Elektroden 3 und 4 werden über einen Eingang 1 in einen Wurzelkanal eines Zahns 2 bis zum Kontakt mit einem Werkzeugbruchstück 5 eingeführt, das beispielsweise im oberen Teil 6 des Wurzelkanals stecken geblieben ist. Danach wird ein elektrischer Stromimpuls über den Stromkreis geschickt, der aus einer Reihenschaltung der Elektrode 3, des Bruchstücks 5 und der Elektrode 4 besteht, und das Bruchstücks 5 wird an die Elektroden 3, 4 mittels einer Lokalerhitzung an deren Kontaktstellen und einer Mikroschweißung angeschweißt. Später werden die Elektroden 3, 4 zusammen mit dem an ihnen festsitzenden Bruchstück 5 aus dem Zahn 2 herausgezogen. Die Zahnfleischebene neben dem Zahn 2 ist mit einer Linie 7 schematisch angedeutet. Die Lage des Werkzeugbruchstücks 5 im Wurzelkanal 6 und manchmal die geometrische Form dieses Bruchstücks, die zum Eingang 1 in den Wurzelkanal ausgerichtet ist, werden durch Röntgenaufnahmen festgestellt, und auf dieser Basis werden die Elektroden 3, 4 je nach Form und Abmessungen gewählt. Während der Einführung der Elektroden 3, 4 in den Wurzelkanal 6 wird der Kontakt zwischen Elektroden 3, 4 und dem Bruchstück 5 mittels Widerstandsänderungen im elektrischen Stromkreis bestimmt.

Bekanntlich wird die Leistung P der Wärmeenergie, welche beim Stromdurchfluss auf der gewählten Kreislaufstrecke freigesetzt wird, folgenderweise berechnet:

$$P = I^2 \cdot R$$

$$(1)$$

wobei: / die Stromstärke im Stromkreis und
R der Widerstand im Stromkreis ist.

Wenn der elektrische Impuls über den Stromkreis läuft, ist die Stromstärke über die gesamte Länge gleich; deswegen wird die Energie hauptsächlich im Kontaktbereich 8 zwischen den Elektroden 3, 4 mit dem Bruchstück 5 freigesetzt, weil der Kontaktwiderstand in diesem Stromkreis seinen Größtwert erreicht und den Widerstand der eigentlichen Elektroden 3, 4 und der Zuführungsleitungen 9, 10 von der Stromquelle bedeutend überschreitet (in Fig. 1 ist die Stromquelle zur Vereinfachung nicht dargestellt). Dadurch wird eine ausschließlich lokale Erhitzung nur in Kontaktzone 8 zwischen den Elektroden 3, 4 und dem Bruchstück 5 gesichert, während die Elektroden 3, 4 und die Zuführungsleitungen 9, 10 nur ein wenig aufgewärmt werden. Dabei ist die an die Elektroden angelegte, elektrische Spannung der Impulsstromquelle gesundheitlich verträglich (maximal 12 V) und sie wirkt hauptsächlich im Bereich des Bruchstücks 5, der sich innerhalb des Wurzelkanals 6 des Zahns 2 und außerhalb der Weichteile des Patienten befindet. Außerdem wirkt der Stromimpuls nur während einer kurzen, kontrollierten Zeitperiode (0,1 Sekunden und weniger). Unter diesen Bedingungen kommt die Erhitzung Stirnflächen der Elektroden 3, 4 und des sich mit diesen in Kontakt befindlichen Metallbruchstücks 5 nur lokal und kurzzeitig zustande, wodurch keine Temperaturerhöhung im umgebenden Zahngewebe über das physiologisch verträgliche Niveau verursacht wird. Um die Anhaftung des Bruchstücks 5 an die Elektroden 3, 4 bei der impulsbedingten Erhitzung zu erleichtern und um den Wärmeübergang auf das umgebende Zahngewebe zu mindern, kann der Wurzelkanal 1, 6 vor dem elektrischen Impuls mittels bekannter Stomatologiemittel vorgetrocknet werden. Die Elektroden 3 und 4 sind durch Kontaktelemente 11 und 12 erweitert, die in einem kleinen Griff 13 innerhalb der Kontaktsätze 14 und 15 mit Leitungen 9 und 10 befestigt werden, um den Anschluss an die erwähnte Impulsstromquelle sicherzustellen. Die Form der Kontaktelemente 11 und 12 kann relativ frei gewählt werden und muss der Form der Kontaktsätze 14 und 15 entsprechen und beispielsweise zylindrisch ausgebildet sein.

Der Arzt führt die Elektroden 3, 4 über den Eingang 1 in den Zahnwurzelkanal 6 hinein und zieht diese Elektroden zusammen mit dem Bruchstück 5 heraus, indem er den Griff 13 festhält. Deswegen muss die Kraft, die die Elektroden 3, 4 im Griff 13 zurückhält, die eventuelle Kraft beim Herausnehmen des im Wurzelkanal 6 eingeklemmten Bruchstücks 5 überschreiten. Außerdem muss die Bauweise der Kontaktsätze 14 und 15 im Griff 13 einen ziemlich schnellen Wechsel der Elektroden 3, 4 ermöglichen, unter anderem auch dafür, um die Elektrodengröße abhängig vom Kanaldurchmesser und von der Bruchstücksgröße zu wählen. Aus diesem Grund können die Kontaktelemente 11 und 12 von den Elektroden 3, 4 in den Kontaktsätzen 14 und 15 des Griffs 13 mit Schrauben 16 und 17 oder mit Hilfe von Spannzangen eingeklemmt werden. Es ist auch sinnvoll, die Zuführungsleitungen 9 und 10 aus dem Griff 13 senkrecht zu den Elektroden 3, 4 zu verlegen, um die Gesamtlänge des Griffs 13 zu vermindern und den Zugriff zu den Mahlzähnen (Molaren) im Mund des Patienten zu erleichtern.

Wenn das Werkzeugbruchstück 5 im Wurzelkanal 6 mit einer beachtlichen Kraft eingeklemmt ist und der erste Versuch zur Entfernung nicht erfolgreich war, wird in den Wurzelkanal 6 vor dem zweiten Versuch ein gesundheitsunschädliches Mittel eingegeben, um die Klemmkraft des Werkzeugbruchstücks im Wurzelkanal zu vermindern. Für diese Zwecke wird beispielsweise eine Lösung von Natriumhypochlorit und/oder ein Mittel zur chemischen Erweiterung des Kanals verwendet (beispielsweise auf der Basis von Ethylendiamintetraessigsäure), das das Wurzeldentin rings um das Bruchstück 5 teilweise auflöst und aufweicht. Außerdem ist es möglich, die Spitze einer Ultraschallquelle mit einer gesundheitsunschädlichen Intensität in den Wurzelkanal 6 hineinzuführen, bis sie das Bruchstück 5 berührt. Die Spitze lockert das Werkzeugbruchstück 5 im Wurzelkanal 6 und vermindert dessen Einklemmkraft.

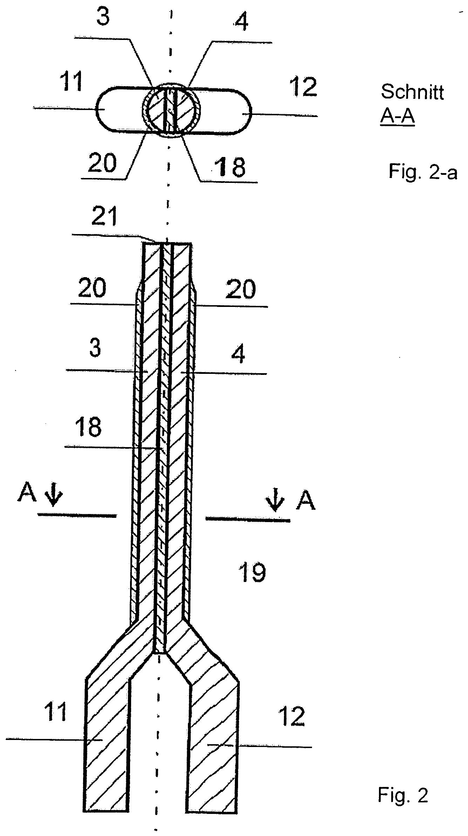

Obgleich die Geometrie der Elektroden 3, 4 ziemlich wahlfrei sein darf, ist es doch von den elektrischen Kenndaten her optimal, wenn die Querschnittsfläche dieser Elektroden und somit auch die elektrische Leitfähigkeit identisch und maximal groß sind. Im Einzelnen ist hierfür eine koaxiale Bauweise der Elektroden 3, 4 eine gute Möglichkeit, jedoch kann in diesem Fall der gleichzeitige Kontakt zwischen den Elektroden 3, 4 und dem Bruchstück 5 nicht immer erreicht werden, wenn das Bruchstück beispielsweise einen neben der Achse liegenden Überstand aufweist. Dabei kann der Kontakt mit der inneren Koaxialelektrode vorhanden und mit der außen liegenden Koaxialelektrode nicht vorhanden sein. Die beste Ausführung für die o. g. Elektroden in dem in den Wurzelkanal einzuführenden Teil ist in Fig. 2 dargestellt. Dabei weisen die Elektroden 3, 4 eine Halbzylindergeometrie auf und werden durch eine Dielektrikumschicht 18 voneinander getrennt. Als Dielektrikum 18, das dabei noch adhäsionsfähig sein muss, um die Elektroden 3, 4 miteinander verbinden zu können, können auch Verbundwerkstoffe, unterschiedliche Polymerkunststoffe sowie Emails verwendet werden. Die gesamte, aus den Elektroden 19 und der Dielektrikumschicht 18 bestehende Baugruppe ist dabei zylindrisch ausgebildet. Die Abmessungen der Elektroden 3, 4 sind dabei durch die Regelgrößen des Wurzelkanals 1, 6 des Zahns 2 begrenzt. Deswegen muss ihre Länge maximal 30 mm und der Querdurchmesser an ihrer Stirnfläche 0,1-1,5 mm betragen. Der Extraktorsatz zur Entfernung des Metallbruchstücks 5 muss einen Elektroden-Baugruppensatz 19 mit unterschiedlichen Festdurchmessern und Festlängen enthalten. Dadurch bekommt der Arzt die Möglichkeit, eine passende Baugruppe 19 mit einem maximalen, bestpassenden Durchmesser auszuwählen, die jedoch über den Eingang 1 in den Wurzelkanal bis zum Kontakt mit dem Bruchstück 5 eingeführt werden kann. Darüber hinaus erlaubt die hier beschriebene Baugruppenkonfiguration mit den Elektroden 19 gute Ergebnisse auch in dem Fall zu erzielen, in dem das Bruchstück 5 seitens des Eingangs 1 in den Wurzelkanal einen unregelmäßigen Überstand aufweist, der gegenüber der Wurzelkanalachse außermittig ist. Dabei kann es vorkommen, dass das Bruchstück 5 nur eine der Elektroden 3, 4 berührt und keinen Kontakt zu der anderen Elektrode hat. Somit wird der elektrische Stromkreis offen, und es besteht keine Möglichkeit, den zum Mikroschweißen erforderlichen Strom wirken zu lassen. In diesem Fall dreht der Arzt die gesamte Elektrodenbaugruppe 19 mittels des Griffs 13 innerhalb von 180 Grad um die Drehachse herum, und daher wird in einer beliebigen Position ein gleichzeitiger Kontakt beider Elektroden 3, 4 mit dem Bruchstück 5 erreicht, wenn der Zeiger (Radiusvektor) der Kanalachse bis zum außermittigen Überstand des Bruchstücks 5 mit der Ausrichtung der Dielektrikumschicht 18 übereinstimmt.

Die Elektroden 3, 4 in der Baugruppe 19 können auch nach Fig. 2 einen dielektrischen Außenüberzug 20 aus demselben Material wie das Dielektrikum 18 aufweisen. Es ist sinnvoll, beispielsweise Teflon als Dielektrikum zu verwenden. Der dielektrische Außenüberzug 20 stört die Flexibilität der Elektrodenbaugruppe 19 nicht und verleiht ihr noch mehr Festigkeit bei Formänderungen während der Einführung in einen gekrümmten Wurzelkanal sowie eine gute elektrische Leitfähigkeit und Wärmeleitfähigkeit der Elektroden in Bezug auf das umgebende Zahngewebe. Außerdem können die Elektroden mit diesem Überzug eine mehrfache Feuchte- oder Trockensterilisation aushalten.

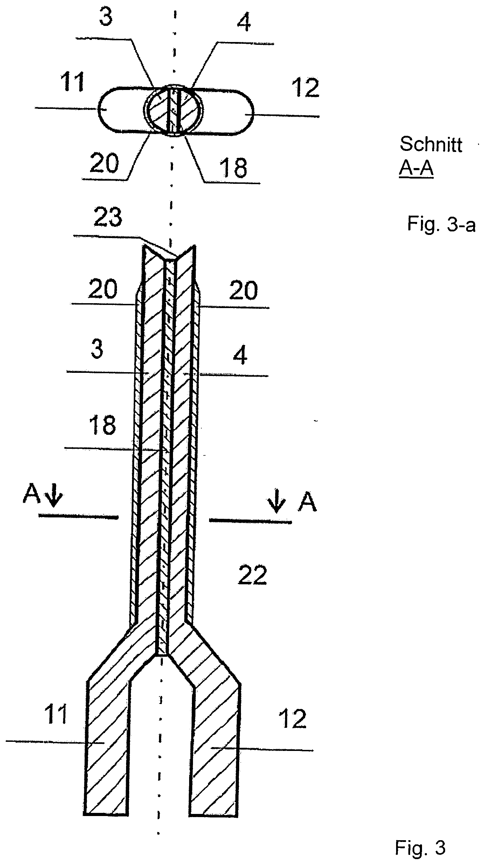

Im Zusammenhang damit, dass das Werkzeugbruchstück 5 in seiner Bruchzone ziemlich formfrei sein kann, kann der Extraktorsatz auch Elektrodenbaugruppensätze mit unterschiedlichen Stirnflächenkonfigurationen enthalten, denn um das Bruchstück 5 mit der Elektrodenbaugruppe 3, 4 zuverlässig zu verbinden, müssen die Stirnflächenformen so weit wie möglich miteinander übereinstimmen, um eine maximale Kontaktfläche zwischen ihnen sicherzustellen. Zur Anbindung der Elektrodenbaugruppe an Bruchstück 5 mit flacher Stirnfläche wird eine Elektrodenbaugruppe 19 mit flacher Stirnfläche 21 nach Fig. 2 verwendet. Zur Anbindung der Elektrodenbaugruppe an ein Bruchstück mit gewölbter Stirnfläche wird nach Fig. 3 eine Elektrodenbaugruppe 22 mit konkaver Stirnfläche 23 verwendet. Eine der Ausführungen für diese Stirnfläche 23 kann auch nach Fig. 3 eine keilförmige Stirnfläche aufweisen.

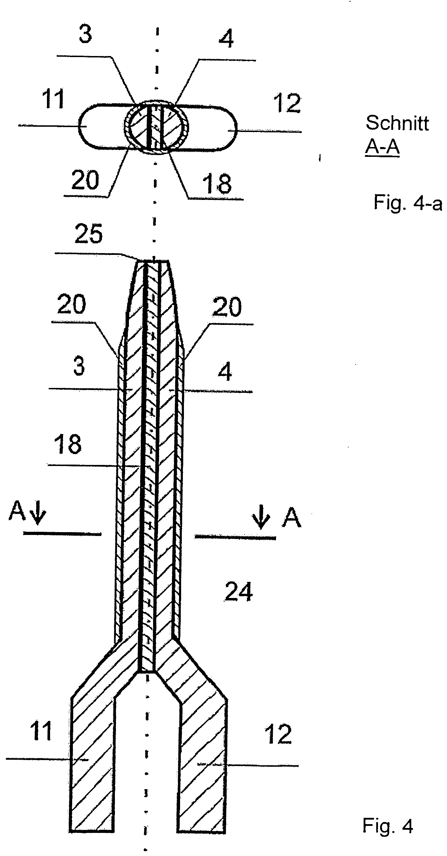

Es ist auch bekannt, dass der Zahnwurzelkanal in der Regel eine zugespitzte Kegelform in Richtung des Apexteils (oberen Teils) 6 aufweist. Aus diesem Grund ist es sinnvoll, im Elektrodenbaugruppensatz aus dem Extraktorzubehör eine in Fig. 4 dargestellte Baugruppe 24 mit einem kegelförmigen Endteil zu verwenden.

Eine derartige Geometrie der Elektroden 3, 4 ermöglicht es, den vorhandenen Wurzelkanalraum zur Erhöhung der Festigkeit und Minderung des elektrischen Widerstands der Elektrodenbaugruppe maximal auszunutzen. Dabei wird zusätzlich eine Mitteneinstellung der Elektrodenbaugruppe 24 um die Wurzelkanalachse in der Zone 8 sowie manchmal eine bevorzugte Kontaktgebung zwischen dem Bruchstück 5 und der Stirnfläche 25 der Elektrodenbaugruppe 24 vorgesehen.

Außerdem ist es wünschenswert, die Elektroden 3, 4 aus einem solchen Metall bzw. einer solchen Legierung anzufertigen, das dem Material des Metallwerkzeugbruchstücks 5 ähnlich ist. Es ist bekannt, dass bei ähnlichen Kenndaten für die elektrische Leitfähigkeit, Wärmekapazität und Schmelztemperatur der Kontaktelektroden und des Bruchstücks die besten Bedingungen zur Mikroschweißung bei einem minimal möglichen Energieverbrauch gesichert sind. Das zahnärztliche Werkzeug zur Behandlung der Wurzelkanäle wird meistens aus unterschiedlichen Stahlsorten, darunter auch nicht rostender Stahl und Ni-Ti-Legierugen, angefertigt. Aus diesem Grund ist es ratsam, den Extraktorsatz mit Elektrodensätzen aus entsprechend passenden Materialen herzustellen.

Es ist auch bekannt, dass der spezifische Widerstand der oben erwähnten Materialen für zahnärztliches Werkzeug bedeutet höher als beispielsweise bei Kupfer, Silber oder Gold ist. Deswegen werden die Zuführungsleitungen 9, 10 von der Impulsstromquelle zu den Elektroden 3, 4 aus Kupferdraht gefertigt, dessen Querschnitt den Durchmesser der Elektroden 3, 4 überschreitet. Dabei muss dieser Kupferdraht flexibel genug sein, um dem Zahnarzt das Hantieren zu erleichtern. Um den elektrischen Stromkreiswiderstand weiter zu vermindern und die angelegte Spannung an die Elektroden 3, 4 auf der Außenoberfläche abzubauen, bevor die Dielektrikumbeschichtung 20 erfolgt, kann die Metallschicht mit einer erhöhten, elektrischen Leitfähigkeit (Kupfer, Silber, Gold) und einer vorgegebenen Stärke über die gesamte Länge der Elektroden 3, 4 elektrolytisch abgeschieden werden. Eine Ausnahme davon bilden die Zonen neben den Stirnflächen 21, 23, 25.

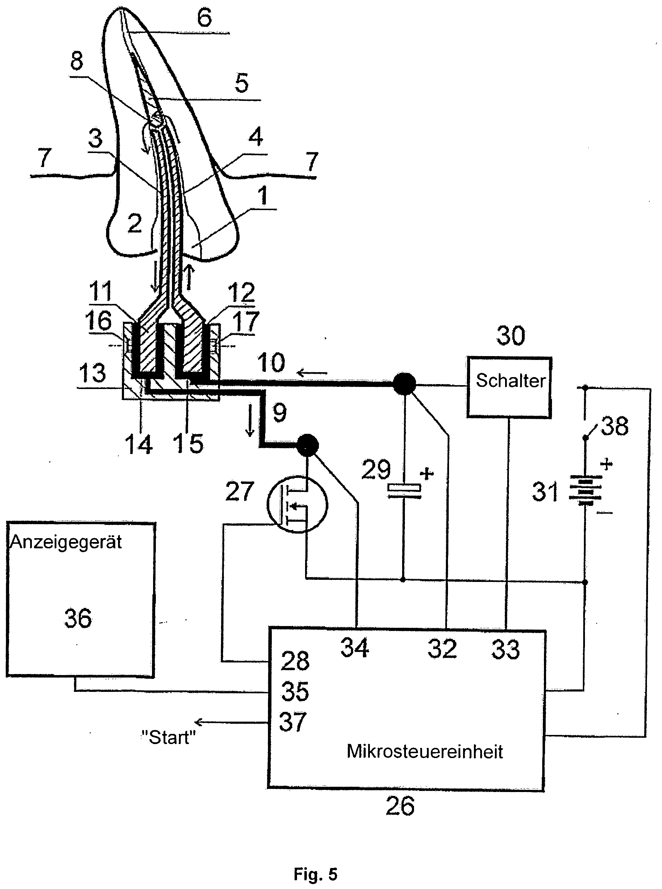

Die oben erwähnte Impulsstromquelle kann unterschiedlich angeordnet werden. Dafür kann beispielsweise eine Gleichspannungsquelle verwendet werden, die mit den Elektroden 3, 4 verbunden ist, um den vorgegebenen Impuls zu erzeugen. Es sind auch andere Schaltkreise möglich. Optimal jedoch ist der Schaltplan mit einem Sammelkondensator nach Fig. 5. Die Stromquellensteuerung erfolgt über eine Mikrosteuereinheit 26 auf der Basis eines serienmäßigen Einchipmikrorechners, der mit einem eingebauten Analog-Digital-Umsetzer (A-D-Umsetzer) ausgerüstet ist, der einige Eingangskanäle, einen Digital-Analog-Umsetzer (D-A-Umsetzer) und einen digitalen Eingabe-Ausgabe-Port aufweist.

Ein Starkstromschalter (bis zu 200 A pro Impuls), der beispielsweise als gängiger Feldeffekttransistor 27 zur Stromschaltung zu den Elektroden 3, 4 und das Bruchstück 5 ausgeführt ist, ist an einen Steuerausgang 28 der Mikrosteuereinheit 26 angeschlossen. Ein Elektrolytkondensator 29 mit einer Kapazität von mindestens 0,1 F, einer Betriebsspannung von mindestens 15 V und einem möglichst niedrigen Innenwiderstand über einen Schalter 30 bzw. über einen Begrenzungswiderstand ist an eine Blockbatterie 31 oder an eine andere Gleichspannungsquelle mit einer Spannung von max. 12 V angeschlossen. Einer der Kanäle des A-D-Umsetzers innerhalb der Mikrosteuereinheit 26 ist über einen Eingang 32, der mit einem erforderlichen Spannungsverstärker oder -teiler ausgerüstet ist, an den Kondensator 29 zwecks Spannungsmessungen angeschlossen. Die Mikrosteuereinheit 26 kann auch den Schalter 30 über einen Steuerausgang 33 steuern. Eingänge 32 und 34 dienen dagegen zu Widerstandsmessungen in einem Stromkreis, der über die Zuführungsleitungen 9, 10 und die Elektroden 3, 4 verläuft. Außerdem ist an die Mikrosteuereinheit 26 über einen Port 35 ein Anzeigegerät 36 angeschlossen, das die gemessenen Widerstandswerte beispielsweise mittels einer LCD-Anzeige oder Leuchtdiodenanzeige sowie mittels eines Signaltongenerators mit einer vorgegebenen Frequenz anzeigen kann. Darüber hinaus ist ein digitaler Eingang 37 der Mikrosteuereinheit 26 an eine "Start"-Taste bzw. an ein Fußpedal zur Stromimpulsgabe über die Elektroden 3, 4 und das Bruchstück 5 angeschlossen. Die Speisung der Mikrosteuereinheit 26 und des Anzeigegeräts 36 erfolgt ebenfalls über die Stromquelle 31, die von einem Schalter 38 aktiviert wird. Im Notfall wird ein innerhalb der Mikrosteuereinheit 26 eingebauter, integraler Gleichspannungsumsetzer benutzt, um die erforderlichen Spannungen zu bekommen.

Der gesamte Ablauf zur Entfernung des Bruchstücks 5 aus dem Wurzelkanal 6 des Zahns 2 wird folgenderweise erledigt. Mit dem Einschalten des Schalters 38 wird die Mikrosteuereinheit 26 eingeschaltet, die den Transistor 27 in den Sperrzustand bringt und den Schalter 30 öffnet. Über diesen Schalter fängt der Kondensator 29 an, sich zu laden. Wenn der Kondensators 29 den vorgegebenen Spannungswert erreicht hat, schließt die Mikrosteuereinheit 26 den Schalter 30. Danach geht die Mikrosteuereinheit 26 in die Betriebsart für wiederholende Widerstandmessungen und Anzeige am Anzeigegerät 36 auf der Stromstrecke zwischen den Eingängen 32 und 34 über.

Führt der Zahnarzt die Elektroden 3, 4 in den Eingang 1 des Wurzelkanals hinein, so fängt das Anzeigegerät 36 an, den großen elektrischen Widerstand (Stromunterbrechung) sowohl visuell als auch mittels eines Signaltons anzuzeigen. Wenn ein Kontakt zwischen beiden Elektroden 3, 4 und dem Bruchstück 5 entsteht, wird der Kontaktwiderstandswert angezeigt, der allerdings nur Bruchteile eines Ohms beträgt.

Durch Drehen des Griffs 13 mit einer geringen Kraft kann der Zahnarzt den besten Kontakt erzielen, d. h. den geringsten angezeigten Widerstandswert bekommen. Danach drückt der Zahnarzt die "Start"-Taste bzw. das Fußpedal, und die Mikrosteuereinheit 26 öffnet den Transistor 27, um den elektrischen Stoßstrom über die Elektroden 3, 4 und das Werkzeugbruchstück 5 durch den Stromkreis durchzulassen, wie in Fig. 5 mit Pfeilen angedeutet ist.

Aus der Literatur [6] ist es bekannt, dass die Qualität der Widerstandsmikroschweißung und dementsprechend die Zuverlässigkeit beim Anhaften des Bruchstücks 5 an den Elektroden 3, 4 erhöht werden kann, wenn die Stromquellenkenndaten beim aktiven Impuls gesteuert werden können. Unter anderem kann die Ausführung der Impulsstromquelle ein Aufrechterhalten der Gleichspannung auf der Strecke zwischen den genannten Elektroden und dem Metallbruchstück ermöglichen, um eine optimale Haltbarkeit beim Anhaften des Bruchstücks an die Elektroden und ein rechtzeitiges Abschalten nach Abfall des Kontaktwiderstands bis zu einem optimalen Niveau sowie eine Sicherstellung der erforderlichen Haltbarkeit zu erreichen. Dazu steuert die Mikrosteuereinheit 26 den Strom über den Transistor 27, indem sie die elektrische Spannung zwischen den Elektroden 3, 4 während des Impulses misst, und hält den gewählten Spannungswert zwischen den Elektroden 3, 4 aufrecht. Die Transistorstromsteuerung 27 kann sowohl mittels der Ausgangsspannung des D-A-Umsetzers als auch mittels des bekannten Impulslängenmodulationsverfahrens nach einem durch die Mikrosteuereinheit 26 ausgeführten Programm erfolgen.

Außerdem kann die Impulsquelle die Möglichkeit haben, einen stabilen Stromwert (bzw. einen vorher gewählten Zeitplan) in der durch die Elektroden 3, 4 und das Metallbruchstück 5 aufrecht zu erhalten, um eine konstante Temperatur im Kontaktbereich während des Mikroschweißimpulses zu gewährleisten. Dazu steuert die Mikrosteuereinheit 26 den Strom programmgemäß über den Transistor 27 bzw. über die Ausgangsspannung des D-A-Umsetzers oder mit dem Pulslängenmodulationsverfahren, wobei sie den Strom zwischen den Elektroden 3, 4 während des Stromimpulses misst.

Alle möglichen Umsetzungsvarianten für die vorliegende Erfindung beschränken sich nicht auf die oben beschriebenen, einzelnen Beispiele für ihre Umsetzung. Diese Beispiele begrenzen auch nicht alle möglichen technischen Lösungen in Übereinstimmung mit den Patentansprüchen.

Gewerbliche Anwendbarkeit

Zur Umsetzung der vorliegenden Erfindung werden allgemein verbreitete, elektronische Bauteile verwendet, nämlich Feldeffekttransistoren in der Schalterfunktion, Kondensatoren, Mikroprozessoren usw. Die angemeldete Erfindung kann auf dem Medizingebiet, und zwar in der Stomatologie bei der endodontischen Behandlung, verwendet werden.

Berücksichtigte Informationsquellen

1.  Ruddle, US-Patent 5 879 160.
2.  Hickok et al., US-Patent 6 227 855.
3.  Teraushi, US-Patentanmeldung 20030124485.
4.  Johnson, US- Patent 4 746 292.
5.  Saito,US-Patent 4 337 038.
6.  "Anlagen für Widerstandsschweißen", herausgegeben von V. V. Smirnov, Energoatomisdat, St. Petersburg, 2000.

**Patentansprüche**

1.  Extraktor zur Entfernung eines Metallwerkzeugbruchstücks (5) aus einem Zahnwurzelkanal (6), umfassend: zwei voneinander getrennte und an eine Stromquelle angeschlossene Metallelektroden (3, 4), deren Querabmessungen es ermöglichen, die beiden Elektroden gleichzeitig in den Wurzelkanal einzuführen und welche Elektroden (3, 4) aus einem dem Material des Metallwerkzeugbruchstücks (5) gleichartigen oder im Hinblick auf elektrische Leitfähigkeit, Wärmekapazität und Schmelztemperatur ähnlichen Material bestehen und einen Aufbau aufweisen, der einen elektrischen Kontakt zwischen jeder der Elektroden (3, 4) und dem zu entfernenden Metallbruchstück (5) sicherstellt, **dadurch gekennzeichnet:**

    - **dass** mittels der Stromquelle ein Stromimpuls über einen aus der ersten Elektrode (3, 4), dem Metallbruchstück (5) und der zweiten Elektrode (4, 3) bestehenden geschlossenen Stromkreis gebbar ist, dessen Stärke groß genug ist, um das Bruchstück (5) an die Elektroden (3, 4) mittels Erhitzung der Kontaktstellen zwischen den Elektroden (3, 4) und dem zu entfernenden Metallbruchstück (5) anzuschweißen,
    - **dass** die Elektroden (3, 4) zusammen mit dem an ihnen festsitzenden Metallbruchstück (5) aus dem Zahnwurzelkanal (6) herausgezogen werden, und
    - **dass** die elektrische Stromquelle auf der Basis eines Kondensators ausgeführt ist, der bis zu einer vorgegebenen Gleichspannung von der Stromquelle geladen und anschließend durch impulsgesteuertes Schalten über die Elektroden (3, 4) und das Metallwerkzeugbruchstück (5) entladen wird.

2.  Extraktor nach Anspruch 1,

**dadurch gekennzeichnet,**
**dass** die genannten Elektroden eine zylindrische Baugruppe bilden, in der jede Elektrode vorhanden ist, dass der Raum zwischen den Halbzylindern über die gesamte Länge mit einem Dielektrikum gefüllt ist und dass die Stirnflächen der Elektroden, die mit dem Bruchstück in Kontakt geraten, kein Dielektrikum aufweisen.

3.  Extraktor nach Anspruch 2,
**dadurch gekennzeichnet,**
**dass** die Stirnflächen der isolierten Elektroden flach ausgebildet sind, um den Kontakt mit dem Bruchstück sicherzustellen.

4.  Extraktor nach Anspruch 2,
**dadurch gekennzeichnet,**
**dass** die Stirnflächen der Elektroden eine konkave Form aufweisen, um den Kontakt mit dem Bruchstück, sicherzustellen.

5.  Extraktor nach einem der Ansprüche 2 bis 4,
**dadurch gekennzeichnet,**
**dass** die genannte Zylinderbaugruppe mit isolierten Elektroden an ihrem Ende eine kegelförmige Einengung aufweist, deren Form dem Wurzelkanal im Kontaktbereich mit dem Bruchstück, ähnlich ist.

6.  Extraktor nach einem der Ansprüche 2 bis 5,
**dadurch gekennzeichnet,**
**dass** die Elektroden in der genannten Zylinderbaugruppe bis auf die Stirnflächen mit einem dielektrischen Kunststoff beschichtet sind.

7.  Extraktor nach einem der Ansprüche 2 bis 6,
**dadurch gekennzeichnet,**
**dass** als dielektrischer Kunststoff Teflon verwendet wird.

8.  Extraktor nach einem der vorhergehenden Ansprüche,
**dadurch gekennzeichnet,**
**dass** die genannten Metallelektroden außerhalb des eventuellen Bruchstückkontaktbereichs einen Überzug aus einem Material aufweisen, dessen spezifischer elektrischer Widerstand gegenüber dem des Elektrodenmaterials kleiner ist.

9.  Extraktor nach Anspruch 8,
**dadurch gekennzeichnet,**
**dass** als Material, dessen spezifischer elektrischer Widerstand gegenüber dem des Elektrodenmaterials kleiner ist, Kupfer verwendet ist.

10. Extraktor nach Anspruch 8,
**dadurch gekennzeichnet,**
**dass** als Material, dessen spezifischer elektrischer Widerstand gegenüber dem des Elektrodenmaterials kleiner ist, Silber verwendet ist.

11. Extraktor nach Anspruch 8,
**dadurch gekennzeichnet,**
**dass** als Material, dessen spezifischer elektrischer Widerstand gegenüber dem des Elektrodenmaterials kleiner ist, Gold verwendet ist.

12. Extraktor nach einem der vorhergehenden Ansprüche,
**dadurch gekennzeichnet,**
**dass** die elektrische Stromquelle eine Impulsstromquelle ist.

13. Extraktor nach Anspruch 12,
**dadurch gekennzeichnet,**
**dass** die Impulsstromquelle eine Gleichspannungsquelle umfasst.

14. Extraktor nach Anspruch 13,
**dadurch gekennzeichnet,**
**dass** die Gleichspannungsquelle einen Kondensator umfasst.

15. Extraktor nach Anspruch 13 oder 14,
**dadurch gekennzeichnet,**
**dass** die Gleichspannungsquelle eine Blockbatterie umfasst.

16. Extraktor nach einem der Ansprüche 12 bis 15
**dadurch gekennzeichnet,**
**dass** die elektrische Stromquelle eine Mikrosteuereinheit umfasst, bestehend aus einem Mikrorechner mit einem eingebauten Analog-Digital-Umsetzer, wenigstens zwei Eingangskanälen, einem Digital-Analog-Umsetzer und einem digitalen Eingabe-Ausgabe-Port.

17. Extraktor nach Anspruch 16,
**dadurch gekennzeichnet,**
**dass** an die Mikrosteuereinheit ein Stromschalter angeschlossen ist, bei dessen Betätigung ein Stromimpuls über den Stromkreis gebbar ist.

18. Extraktor nach Anspruch 17,
**dadurch gekennzeichnet,**
**dass** an die Mikrosteuereinheit mindestens ein Taster zur Betätigung des Stromschalters angeschlossen ist.

19. Extraktor nach Anspruch 17 oder 18,
**dadurch gekennzeichnet,**
**dass** an die Mikrosteuereinheit Mittel zur Bestimmung des Widerstands im Stromkreise angeschlossen sind.

20. Extraktor nach Anspruch 19,
**dadurch gekennzeichnet,**

**dass** an die Mikrosteuereinheit ein den Widerstand des Stromkreises anzeigendes Anzeigegerät angeschlossen ist.

## Claims

1. An extractor for removing a metal tool fragment (5) from a tooth root canal (6) comprising: two mutually separate metal electrodes (3, 4) connected to a power source, the lateral dimensions of which electrodes enable both electrodes to be inserted simultaneously into the root canal, with said electrodes (3,4) consisting of a material of the same kind as the material of the metal tool fragment (5) or similar in terms of electrical conductivity, heat capacity and melting point and having a structure which ensures electrical contact between each of the electrodes (3, 4) and the metal fragment (5) to be removed,
**characterised in that**:

- by means of the power source a current pulse can be transmitted via a closed circuit consisting of the first electrode (3, 4), the metal fragment (5) and the second electrode (4, 3), the strength of which pulse is sufficient to weld the fragment (5) to the electrodes (3, 4) by means of heating the contact points between the electrodes (3, 4) and the metal fragment (5) to be removed,
- the electrodes (3, 4) are extracted from the tooth root canal (6) together with the metal fragment (5) stuck to them, and
- the electrical power source is embodied on the basis of a capacitor, which is charged by the power source up to a predefined direct voltage and then discharged through pulse-controlled switching via the electrodes (3, 4) and the metal tool fragment (5).

2. The extractor according to Claim 1,
**characterised in that**
the stated electrodes form a cylindrical assembly, in which each electrode is present, the space between the half-cylinders is filled along the entire length with a dielectric and the end faces of the electrodes that come into contact with the fragment have no dielectric.

3. The extractor according to Claim 2,
**characterised in that**
the end faces of the insulated electrodes are formed to be flat in order to guarantee contact with the fragment.

4. The extractor according to Claim 2,
**characterised in that**
the end faces of the electrodes have a concave form in order to guarantee contact with the fragment.

**5.** The extractor according to one of Claims 2 to 4, **characterised in that** the stated cylinder assembly with insulated electrodes has at its end a conical narrowing, the form of which is similar to the root canal in the contact area with the fragment.

**6.** The extractor according to one of Claims 2 to 5, **characterised in that** the electrodes in the stated cylinder assembly except for the end faces are coated with a dielectric plastic.

**7.** The extractor according to one of Claims 2 to 6, **characterised in that** Teflon is used as the dielectric plastic.

**8.** The extractor according to one of the preceding claims, **characterised in that** the stated metal electrodes outside the potential fragment contact area have a coating made of a material, the specific electrical resistance of which is less than that of the electrode material.

**9.** The extractor according to Claim 8, **characterised in that** copper is used as the material, the specific resistance of which is less than that of the electrode material.

**10.** The extractor according to Claim 8, **characterised in that** silver is used as the material, the specific resistance of which is less than that of the electrode material.

**11.** The extractor according to Claim 8, **characterised in that** gold is used as the material, the specific resistance of which is less than that of the electrode material.

**12.** The extractor according to one of the preceding claims, **characterised in that** the electrical power source is a pulse current source.

**13.** The extractor according to Claim 12, **characterised in that** the pulse current source has a DC voltage source.

**14.** The extractor according to Claim 13, **characterised in that** the DC voltage source has a capacitor.

**15.** The extractor according to claim 13 or 14, **characterised in that** the DC voltage source has a block battery.

**16.** The extractor according to one of Claims 12 to 15, **characterised in that** the electrical power source has a microcontroller unit, consisting of a microcomputer with an integral analogue-digital converter, at least two input channels, a digital-analogue converter and a digital input/output port.

**17.** The extractor according to Claim 16, **characterised in that** a power switch is connected to the microcontroller unit, upon actuation of which power switch a current pulse can be transmitted via the circuit.

**18.** The extractor according to Claim 17, **characterised in that** at least one button for actuating the power switch is connected to the microcontroller unit.

**19.** The extractor according to claim 17 or 18, **characterised in that** means for determining the resistance in the circuit are connected to the microcontroller unit.

**20.** The extractor according to Claim 19, **characterised in that** a display device displaying the resistance of the circuit is connected to the microcontroller unit.

**Revendications**

**1.** Extracteur prévu pour l'extraction d'un fragment d'instrument en métal (5) du canal (6) de la racine d'une dent, comprenant : deux électrodes métalliques (3, 4) séparées l'une de l'autre et raccordées à une source de courant, dont les dimensions latérales permettent d'insérer les deux électrodes simultanément dans le canal de la racine et lesdites électrodes (3, 4) sont constituées d'un matériau similaire au matériau du fragment d'instrument en métal (5) ou semblable en termes de conductivité, de capacité thermique et de température de fusion et présentent une structure qui assure un contact électrique entre chacune des électrodes (3, 4) et le fragment en métal (5) à extraire, **caractérisé en ce que** :

- au moyen de la source de courant, une impulsion de courant peut être délivrée par un circuit électrique fermé constitué de la première électrode (3, 4), le fragment en métal (5) et la seconde électrode (4, 3), dont l'intensité est assez forte pour souder le fragment (5) sur les électrodes (3, 4) par chauffage des points de contact entre les électrodes (3, 4) et le fragment en métal (5) à extraire,
- les électrodes (3, 4) sont extraites du canal (6) de la racine de la dent conjointement avec le fragment en métal (5) qui est solidement fixé à celles-ci, et

- la source de courant électrique se présente sous la forme d'un condensateur qui est chargé jusqu'à une tension continue prédéfinie à partir de la source de courant et ensuite déchargé par commutation à commande par impulsions via les électrodes (3, 4) et le fragment d'instrument en métal (5).

2. Extracteur selon la revendication 1, **caractérisé en ce que** lesdites électrodes forment un module cylindrique comprenant chaque électrode, **en ce que** l'espace entre les demi-cylindres est rempli sur toute la longueur par un diélectrique, et **en ce que** les faces frontales des électrodes qui entrent en contact avec le fragment, sont exemptes de diélectrique.

3. Extracteur selon la revendication 2, **caractérisé en ce que** les faces frontales des électrodes isolées sont plates pour assurer le contact avec le fragment.

4. Extracteur selon la revendication 2, **caractérisé en ce que** les faces frontales des électrodes présentent une forme concave pour assurer le contact avec le fragment.

5. Extracteur selon l'une quelconque des revendications 2 à 4, **caractérisé en ce que** ledit module cylindrique doté des électrodes isolées présente à son extrémité un rétrécissement conique dont la forme est similaire au canal de la racine dans la zone de contact avec le fragment.

6. Extracteur selon l'une quelconque des revendications 2 à 5, **caractérisé en ce que** les électrodes sont revêtues dans ledit module cylindrique jusqu'aux faces frontales, d'un plastique diélectrique.

7. Extracteur selon l'une quelconque des revendications 2 à 6, **caractérisé en ce que** le téflon est utilisé comme plastique diélectrique.

8. Extracteur selon l'une quelconque des revendications précédentes, **caractérisé en ce que** lesdits électrodes métalliques présentent en dehors de la zone de contact de fragment éventuel un revêtement en un matériau dont la résistance électrique spécifique est inférieure à celle du matériau des électrodes.

9. Extracteur selon la revendication 8, **caractérisé en ce que** l'on utilise du cuivre comme matériau, dont la résistance électrique spécifique est inférieure à celle du matériau des électrodes.

10. Extracteur selon la revendication 8, **caractérisé en ce que** l'on utilise de l'argent comme matériau dont la résistance électrique spécifique est inférieure à celle du matériau des électrodes.

11. Extracteur selon la revendication 8, **caractérisé en ce que** l'on utilise de l'or comme matériau dont la résistance électrique spécifique est inférieure à celle du matériau des électrodes.

12. Extracteur selon l'une quelconque des revendications précédentes, **caractérisé en ce que** la source de courant électrique est une source de courant pulsé.

13. Extracteur selon la revendication 12, **caractérisé en ce que** la source de courant pulsé comprend une source de tension continue.

14. Extracteur selon la revendication 13, **caractérisé en ce que** la source de tension continue comprend un condensateur.

15. Extracteur selon la revendication 13 ou 14, **caractérisé en ce que** la source de tension continue comprend un bloc batterie.

16. Extracteur selon l'une quelconque des revendications 12 à 15, **caractérisé en ce que** la source de courant électrique comprend une micro-unité de commande comprenant un micro-ordinateur doté d'un convertisseur analogique-numérique intégré, au moins deux canaux d'entrée, un convertisseur numérique-analogique et un port entrée/sortie numérique.

17. Extracteur selon la revendication 16, **caractérisé en ce que**, à la micro-unité de commande, est raccordé un commutateur de courant dont l'actionnement peut délivrer une impulsion de courant par le circuit électrique.

18. Extracteur selon la revendication 17, **caractérisé en ce que**,

nt, est raccordé au moins un bouton poussoir destiné à actionner le commutateur de courant.

19. Extracteur selon la revendication 17 ou 18, **caractérisé en ce que**, à la micro-unité de commande, sont raccordés des moyens destinés à déterminer la résistance dans le circuit électrique.

20. Extracteur selon la revendication 19, **caractérisé en ce que**, à la micro-unité de commande, est raccordé un afficheur affichant la résistance du circuit électrique.

ste, est raccordé au

à la micro-unité de commande, est raccordé au moins un bouton poussoir destiné à actionner le commutateur de courant.

**Fig. 1**

Zur Impulsstromquelle

Schnitt
A-A

Fig. 2-a

Fig. 2

3    4

11    12

20    18

Schnitt
A-A

Fig. 3-a

23

20    20

3    4

18

A↓    ↓ A

22

11    12

Fig. 3

Schnitt
A-A

Fig. 4-a

Fig. 4

Fig. 5

**EP 1 719 467 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5879160 A
- US 6227855 B
- US 20030124485 A
- US 4746292 A

- US 3322124 A
- US 4992045 A
- US 4337038 A, Saito

**In der Beschreibung aufgeführte Nicht-Patentliteratur**

- Anlagen für Widerstandsschweißen. Energoatomisdat. 2000